# EUROPÄISCHE PATENTANMELDUNG

(11) **EP 1 486 834 A1**
(43) Veröffentlichungstag der Anmeldung: **15.12.2004**
(21) Anmeldenummer: 04010867.2
(22) Anmeldetag: 07.05.2004
(51) Int. Cl.: G03H 1/02, G03H 1/00, G01S 17/66, F41H 13/00, H01S 3/00

(54) **Verfahren und Vorrichtung zur Übertragung der Wellenfront eines primären Lichtimpulses auf einen sekundären Lichtimpuls**

(30) Priorität: 11.06.2003 DE 10326221
(71) Anmelder: Rheinmetall W & M GmbH, 29345 Unterlüss (DE)
(72) Erfinder: Langhans, Dieter, Dr., 25337 Elmshorn (DE); Wollmann, Gerd, Dr., 29229 Celle (DE); Krause, Ulf, 07751 Jena (DE)
(74) Vertreter: Dietrich, Barbara, Dipl.-Ing.

(57) **Zusammenfassung**

Die Erfindung betrifft ein Verfahren zur Übertragung der Wellenfront von primären Lichtimpulsen (3) mit einer vorgebbaren ersten Pulsdauer und/oder Energie auf sekundäre Lichtimpulse (8) mit einer vorgebbaren zweiten Pulsdauer und/oder Energie.

Um auf einfache Weise eine derartige Wellenfronttransformation durchzuführen, schlägt die Erfindung vor, jeweils in einem ersten Zeitabschnitt die Wellenfronten der primären Lichtimpulse (3) mit Hilfe von Referenz-Lichtimpulsen (4) als räumliches Hologramm in einem holographischen Speicher (1) abzuspeichem, und in einem nachfolgenden zweiten Zeitabschnitt dann dieses gespeicherte räumliche Hologramm mit Hilfe von die zweite Pulsdauer und Energie aufweisenden Rekonstruktions-Lichtimpulsen (6) auszulesen, wobei die das Hologramm auslesenden Rekonstruktions-Lichtimpulse (6) die gleiche Wellenlänge und Wellenfront besitzen wie die Referenz-Lichtimpulse (4).

## Beschreibung

Die Erfindung betrifft ein Verfahren zur Übertragung der Wellenfront von primären Lichtimpulsen mit einer vorgebbaren ersten Pulsdauer und/oder Energie auf sekundäre Lichtimpulse mit einer vorgebbaren zweiten Pulsdauer und/oder Energie. Die Erfindung bezieht sich ferner auf eine Vorrichtung zur Durchführung eines derartigen Verfahrens.

In der Praxis stellt sich häufig das Problem, auf welche Weise eine Wellenfronttransformation von unterschiedlichen Lichtimpulsen gleicher oder unterschiedlicher Pulsdauer und/oder Energie realisiert werden kann. Ein Anwendungsbeispiel hierfür ist die Bestrahlung von entfernten Gegenständen (Zielen) mit einem Leistungslaser. Da es bei einer derartigen Bestrahlung zu turbulenzbedingten Laserstrahldeformationen kommen kann, wird zur Kompensation dieser Deformationen eine nichtlineare optische Phasenkonjugation vorgenommen. Allerdings erfordert eine effiziente nichtlineare optische Phasenkonjugation intensive Lichtimpulse. Daher werden zur Phasenkonjugation vorwiegend Lichtimpulse mit einer Pulsdauer im Nanosekundenbereich verwendet. Für die Wechselwirkung von Lichtimpulsen mit dem Material des Zieles kann es jedoch vorteilhaft sein, Impulse im Mikro- oder Millisekundenbereich anzuwenden. Es wäre daher wünschenswert, für phasenkonjugierte Lichtimpulse mit einer Pulsdauer im Nanosekundenbereich eine Transformation durchzuführen, derart, daß sich nach der Transformation entsprechend phasenkonjugierte Lichtimpulse mit einer Pulsdauer im Mikro- oder Millisekundenbereich ergeben.

Der Erfindung liegt daher die Aufgabe zugrunde, ein Verfahren der eingangs erwähnten Art anzugeben, mit dem auf einfache Weise eine Wellenfronttransformation von unterschiedlichen Lichtimpulsen durchgeführt werden kann, wobei die Lichtimpulse eine gleiche oder eine unterschiedliche Pulsdauer- und/oder Energie besitzen können. Ferner soll eine Vorrichtung zur Durchführung des Verfahrens angegeben werden.

Diese Aufgabe wird erfindungsgemäß hinsichtlich des Verfahrens durch die Merkmale des Anspruchs 1 und hinsichtlich der Vorrichtung durch die Merkmale des Anspruchs 8 gelöst. Weitere, besonders vorteilhafte Ausgestaltungen der Erfindung offenbaren die Unteransprüche.

Die Erfindung beruht im wesentlichen auf dem Gedanken, in einem ersten Zeitabschnitt die Wellenfronten der eine erste vorgegebene Pulsdauer und Energie aufweisenden primären Lichtimpulse mit Hilfe von Referenz-Lichtimpulsen als räumliches Hologramm in einem holographischen Speicher abzuspeichern, und in einem nachfolgenden zweiten Zeitabschnitt dann dieses gespeicherte räumliche Hologramm mit Hilfe von eine zweite Pulsdauer und Energie aufweisenden Rekonstruktions-Lichtimpulsen auszulesen, wobei die das Hologramm auslesenden Rekonstruktions-Lichtimpulse die gleiche Wellenlänge und Wellenfront besitzen wie die Referenzimpulse.

Die Pulsdauern der primären und sekundären Lichtimpulse können gleich oder unterschiedlich voneinander sein. Im Falle des eingangs erwähnten Beispieles wird die Pulsdauer der phasenkonjugierten sekundären Lichtimpulse im Mikro- bzw. Millisekundenbereich liegen und die Pulsdauer der phasenkonjugierten primären Lichtimpulse im Nanosekundenbereich,

Auch die Energie der primären und sekundären Lichtimpulse können gleich oder unterschiedlich sein, wobei im Falle einer Energieverstärkung die Energie des rekonstruierten phasenkonjugierten sekundären Lichtimpulses von der Zerstörschwelle des Hologrammspeichers abhängt.

Als ein- und auslesbare Speicher der räumlichen Hologramme haben sich vor allem im Handel erhältliche, optisch adressierbare räumliche Lichtmodulatoren (OASLM) als geeignet erwiesen, die als lichtmodulierendes Medium eine Flüssigkristallschicht aufweisen.

Weitere Einzelheiten und Vorteile der Erfindung ergeben sich aus den folgenden anhand von Figuren erläuterten Ausführungsbeispielen. Es zeigen:
Fig.1 eine schematische Anordnung eines holographischen Speichers zur erfindungsgemäßen Wellenfronttransformation zweier optischer Impulse und
Fig.2 eine erfindungsgemäße Vorrichtung zur Bestrahlung eines Zieles.

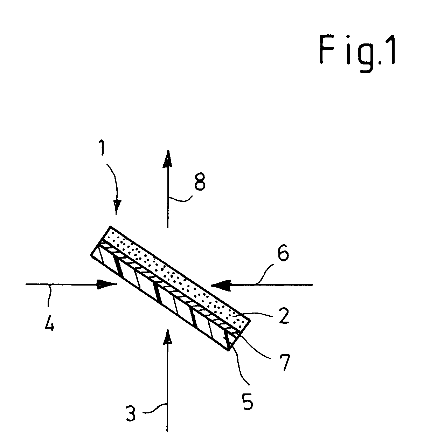

In Fig.1 ist mit 1 ein nur schematisch angedeuteter holographischer Speicher bezeichnet, der im wesentlichen aus einem optisch adressierbaren räumlichen Lichtmodulator besteht, welcher zur Modulation eine Flüssigkristallschicht 2 verwendet. Entsprechende Lichtmodulatoren, die häufig auch als OASLM bezeichnet werden (O=optical, A=addressable, S=spatial, L=light, M=modulator), sind im Handel erhältlich und werden beispielsweise von der Firma Jenoptik Laser, Optik Systeme GmbH vertrieben.

Zur Speicherung eines z.B. phasenkonjugierten primären Lichtimpulses 3 wird dieser zusammen mit einem Referenz-Lichtimpuls 4 gleicher Wellenlänge in den holographischen Speicher 1 eingeschrieben, d.h., es werden der phasenkonjugierte primäre Lichtimpuls 3 und der Referenz-Lichtimpuls 4 auf einem der Flüssigkristallschicht 2 zugeordneten Photohalbleiter 5 abgebildet, so daß durch die Interferenz der Lichtimpulse 3 und 4 ein elektrisches Hologramm entsteht, welches in der Flüssigkristallschicht 2 zu einer entsprechenden räumlichen Verteilung der Orientierung der in der Regel nematischen Kristalle und damit zu einer ortsabhängigen Variation des Brechungsindexes der Flüssigkristallschicht führt. Dabei müssen zur Erzeugung des Hologrammes der phasenkonjugierte primäre Lichtimpuls 3 und der Referenz-Lichtimpuls 4 unter verschiedenen Einfallswinkeln auf den Photohalbleiter 5 fallen.

Zum Auslesen des in der Flüssigkristallschicht 2 gespeicherten Hologrammes wird ein Rekonstruktions-Lichtimpuls 6 z.B. anderer Pulsdauer und/oder Energie, aber gleicher Wellenlänge wie der Referenz-Lichtimpuls 4 auf die Flüssigkristallschicht 2 gelenkt, durchläuft diese Schicht und wird z.B. durch einen zwischen Photohalbleiter 5 und Flüssigkristallschicht 2 angeordneten Reflektor 7 reflektiert, so daß sich am Ausgang des holographischen Speichers 1 ein rekonstruierter phasenkonjugierter sekundärer Lichtimpuls 8 ergibt. Wichtig ist bei diesem Vorgang, daß sowohl der Referenz-Lichtimpuls 4 als auch der Rekonstruktions-Lichtimpuls 6 gleiche Wellenfronten (in der Regel ebene Wellenfronten) besitzen, damit die Wellenfront des sekundären Lichtimpulses 8 mit der Wellenfront des phasenkonjugierten primären Pulses 3 übereinstimmt.

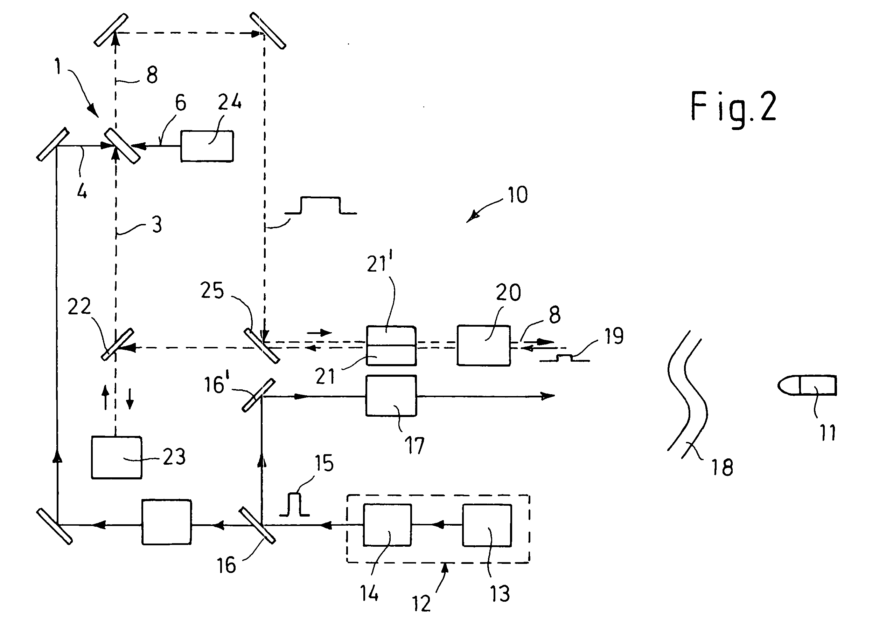

Fig.2 zeigt die Verwendung der vorstehend beschriebenen Anordnung bei einer erfindungsgemäßen Vorrichtung 10 zur Bestrahlung eines Zieles 11 mit sekundären Lichtimpulsen 8 (vorzugsweise einer im "Nahen Infrarot" liegenden Wellenlänge), wobei die Pulsdauer z.B. im Mikrosekundenbereich liegt.

Die Vorrichtung 10 umfaßt eine erste Laseranordnung 12, die aus einem kontinuierlich arbeitenden Laser 13 besteht, dem ein z.B. elektrooptischer Schalter 14 nachgeschaltet ist. Der mit Hilfe des Schalters 14 erzeugte Lichtimpuls 15, mit einer Pulsdauer von z.B. einigen 10 ns, wird über Umlenkspiegel 16, 16' umgelenkt, gelangt durch einen ersten Verstärker 17 der Vorrichtung 10 und trifft dann nach Passieren der schematisch mit 18 angedeuteten Atmosphäre auf das Ziel 11.

Der von dem Ziel 11 reflektierte Lichtimpuls 19 wird von einer Teleskopoptik 20 der Vorrichtung 10 aufgefangen und in einem zweiten Verstärker 21 verstärkt. Anschließend trifft der verstärkte Lichtimpuls 19 auf einen ersten Polarisationsstrahlteiler 22, welcher den Lichtimpuls 19 auf einen Phasenkonjugationsspiegel 23 lenkt. Der dadurch entstehende phasenkonjugierte primäre Lichtimpuls 3 passiert nach geeigneter Polarisationsdrehung (nicht dargestellt) den ersten Polarisationsstrahlteiler 22 und gelangt zu dem bereits im Zusammenhang mit der Fig.1 beschriebenen holographischen Speicher 1.

Dort interferiert der primäre Lichtimpuls 3 mit einem Referenz-Lichtimpuls 4, welcher im geeigneten Moment (zeitliches Zusammentreffen mit dem phasenkonjugierten Lichtimpuls unter Berücksichtigung der Lichtlaufzeit) gleichfalls von der ersten Laseranordnung 12 erzeugt wird. Die Amplitude und Phase des primären Lichtimpulses 3 werden dann in dem holographischen Speicher 1 gespeichert.

Da die Phasenkonjugation eine Frequenzverschiebung bewirkt, muß auch der Referenz-Lichtimpuls in der Frequenz entsprechend verschoben werden (nicht dargestellt).

Der von einer zweiten Laseranordnung 24 kommende Rekonstruktions-Lichtimpuls 6 trifft aus genau der gleichen Richtung wie der Referenz-Lichtimpuls 4 auf den holographischen Speicher 1. Durch die Beugung am Hologramm wird in der 1. Beugungsordnung der phasenkonjugierte sekundäre Lichtimpuls 8 rekonstruiert. Der sekundäre Lichtimpuls 8 wird dann durch geeignete Polarisation über einen zweiten Polarisationsstrahlteiler 25 in einen Leistungsverstärker 21' eingekoppelt und über die Teleskopoptik 20 auf das Ziel 11 gerichtet.

Die vorstehend beschriebene Vorrichtung 10 kann beispielsweise als eine Mittelenergie-Laserwaffe zur Zerstörung von Geschossen 11 eingesetzt werden. Bei derartigen Vorrichtungen ist die Kombination der nichtlinearen Phasenkonjugation und der Verwendung eines holographischen Speichers zur Wellenfronttransformation unter anderem aus zwei Gründen besonders vorteilhaft:

Zum einen wird die Pulsdauer des sekundären Lichtimpulses nicht durch die Pulsdauer des primären Lichtimpulses, sondern durch die Pulsdauer des Rekonstruktions-Lichtimpulses bestimmt. Die Pulsdauer des sekundären Lichtimpulses kann daher derart gewählt werden, daß eine effiziente Wechselwirkung des Laserimpulses mit dem Material des Zieles bewirkt wird, wobei in dem nachgeschalteten Leistungsverstärker der sekundäre Lichtimpuls auf die für die Laserwaffe erforderliche Energie verstärkt werden kann.

Eine unterschiedliche Pulsdauer führt dabei nur dann zu unvollständiger Kompensation der Phasenstörungen durch die Atmosphäre, wenn der Einschreibe-Auslesezyklus des holographischen Speichers langsamer als die Turbulenzänderung der Atmosphäre ist. Derartige Turbulenzänderungen erfolgen mit maximal 100 Hz (entsprechend 10 ms). Da der als holographische Speicher verwendete OASLM einen Einschreibe-Auslesezyklus von etwa 0,1 ms bis 1 ms zuläßt, ist die erfindungsgemäße Vorrichtung zur Turbulenzkompensation anwendbar.

Zum anderen weist die Vorrichtung 10 eine hohe Empfindlichkeit auf. So besitzt der als holographische Speicher 1 verwendete OASLM eine Empfindlichkeit in der Größenordnung von 10⁻⁴ bis 10⁻⁶ J/cm². Der zweite Verstärker 21 und Phasenkonjugationsspiegel 23 zusammen weisen eine Verstärkung von bis zu 10¹⁰ auf. In einem 5 cm² großen OASLM 1 kann man also extrem schwache vom Ziel 11 rückgestreute Laserpulse von 5x10⁻¹⁴ bis 5x10⁻¹⁶ J "einlesen".

Je nach der Zerstörschwelle des verwendeten holographischen Speichers kann der rekonstruierte phasenkonjugierte sekundäre Lichtimpuls einen 10⁴-fachen Energiegewinn gegenüber dem "eingeschriebenen" phasenkonjugierten primären Lichtimpuls erzeugen.

Insgesamt kann daher mit einer Kombination aus nichtlinearer optischer Phasenkonjugation und einem als holographischen Speicher verwendeten OASLM eine Energieverstärkung des vom Ziel 11 rückgestreuten Laserimpulses von etwa 10¹⁴ erreicht werden.

### Bezugszeichenliste

- 1: holographischer Speicher; OASLM
- 2: Flüssigkristallschicht
- 3: primärer Lichtimpuls
- 4: Referenz-Lichtimpuls
- 5: Photohalbleiter
- 6: Rekonstruktions-Lichtimpuls
- 7: Reflektor
- 8: sekundärer Lichtimpuls

- 10: Vorrichtung
- 11: Ziel, Geschoß
- 12: erste Laseranordnung
- 13: Laser
- 14: Schalter
- 15: Lichtimpuls
- 16,16': Umlenkspiegel
- 17: erster Verstärker
- 18: Atmosphäre
- 19: Lichtimpuls
- 20: Teleskopoptik
- 21: zweiter Verstärker
- 21': Leistungsverstärker
- 22: erster Polarisationsstrahlteiler
- 23: Phasenkonjugationsspiegel
- 24: zweite Laseranordnung
- 25: zweiter Polarisationsstrahlteiler

## Patentansprüche

1. Verfahren zur Übertragung der Wellenfront von primären Lichtimpulsen mit einer vorgebbaren ersten Pulsdauer und/oder Energie auf sekundäre Lichtimpulse mit einer vorgebbaren zweiten Pulsdauer und/oder Energie mit den Merkmalen:
a) in einem ersten Zeitabschnitt wird die Wellenfront der primären Lichtimpulse mit Hilfe von Referenz-Lichtimpulsen als räumliches Hologramm in einem holographischen Speicher (1) abgespeichert, und
b) in einem nachfolgenden zweiten Zeitabschnitt wird dann dieses gespeicherte räumliche Hologramm mit Hilfe von die zweite Pulsdauer aufweisenden Rekonstruktions-Lichtimpulsen ausgelesen, wobei die das Hologramm auslesenden Rekonstruktions-Lichtimpulse die gleiche Wellenlänge und Wellenfront besitzen wie die Referenzimpulse.

2. Verfahren nach Anspruch 1, **dadurch gekennzeichnet, daß** die Pulsdauer der sekundären Lichtimpulse unterschiedlich von der Pulsdauer der primären Lichtimpulse gewählt wird.

3. Verfahren nach Anspruch 2, **dadurch gekennzeichnet, daß** die Pulsdauer der sekundären Lichtimpulse größer als die Pulsdauer der primären Lichtimpulse gewählt wird.

4. Verfahren nach Anspruch 1 oder 2, **dadurch gekennzeichnet, daß** die Wellenfront der primären Lichtimpulse derart ausgebildet wird, daß nach der Rekonstruktion des Hologrammes die sekundären Lichtimpulse eine Wellenfront aufweisen, mittels welcher Phasenstörungen durch das von dem sekundären Lichtimpulsen zu durchlaufende Medium kompensiert werden.

5. Verfahren nach Anspruch 4, **dadurch gekennzeichnet, daß** die primären Lichtimpulse vor der Erzeugung des Hologrammes das von den sekundären Lichtimpulsen zu durchlaufende und Phasenstörungen verursachende Medium durchlaufen, daß für diese die Phasenstörungen aufweisenden primären Lichtimpulse eine Phasenkonjugation durchgeführt wird und daß die phasenkonjugierten Lichtimpulse dann als Hologramm abgespeichert werden.

6. Verfahren nach Anspruch 5, **dadurch gekennzeichnet, daß** bei Medien mit zeitabhängigen Phasenstörungen die Zeit zum Ein- und Auslesen des Hologrammes kleiner oder gleich gewählt wird als/wie die maximale Änderung der erwarteten Phasenstörung.

7. Verfahren nach Anspruch 6, **dadurch gekennzeichnet, daß** die Energie der Rekonstruktionsimpulse derart gewählt wird, daß die sekundären Lichtimpulse eine gegenüber den primären Lichtimpulsen höhere Energie aufweisen.

8. Vorrichtung nach einem der Ansprüche 1 bis 7, **dadurch gekennzeichnet, daß** als einund auslesbarer holographischer Speicher (1) ein optisch adressierbarer räumlicher Lichtmodulator verwendet wird, der als lichtmodulierendes Medium eine Flüssigkristallschicht (2) enthält.

9. Vorrichtung nach Anspruch 9, **dadurch gekennzeichnet,**
**daß** der holographische Speicher (1) in einer Vorrichtung zum Bestrahlen eines Zieles (11) angeordnet ist, bei welcher die durch die Atmosphäre (18) verursachten Phasenstörungen kompensiert werden,
**daß** hierzu die Vorrichtung (10) eine erste Laseranordnung (12) zur Erzeugung von Lichtimpulsen einer ersten Pulsdauer sowie einen Phasenkonjugationsspiegel (23) aufweist, an dem die an dem Ziel (11) reflektierten primären Lichtimpulse nach Verstärkung reflektiert werden, um dann als primäre Lichtimpulse mit Referenz-Lichtimpulsen (4) auf einem dem holographischen Speicher (1) zugeordneten Photohalbleiter (5) zu interferieren, der seinerseits in der Flüssigkristallschicht (2) ein räumliches Hologramm erzeugt,
**daß** die Vorrichtung (1) eine zweite Laseranordnung (24) zur Erzeugung von Rekonstruktions-Lichtimpulsen zum Auslesen des gespeicherten Hologrammes aus dem holographischen Speicher (1) aufweist, wobei die Rekonstruktions-Lichtimpulse eine größere Pulsdauer aufweisen als die primären Lichtimpulse.

10. Vorrichtung nach Anspruch 9, **dadurch gekennzeichnet, daß** dem holographischen Speicher (1) ein Leistungsverstärker nachgeschaltet ist, welcher die sekundären Lichtimpulse auf die für ihre anschließende Verwendung erforderliche Energie verstärkt.

11. Vorrichtung nach Anspruch 10, **dadurch gekennzeichnet, daß** die zweite Laseranordnung (24) Lichtimpulse erzeugt, die eine höhere Energie besitzen als die auf den holographischen Speicher (1) auftreffenden primären Lichtimpulse.
